# EUROPEAN PATENT SPECIFICATION

(11) **EP 3 550 699 B1**
(45) Date of publication and mention of the grant of the patent: **08.10.2025**
(21) Application number: 18165425.2
(22) Date of filing: 03.04.2018
(51) Int. Cl.: H02K 3/28

(54) **WINDING DESIGN ARRANGEMENT FOR AN ELECTRICAL MACHINE AND WIND TURBINE GENERATOR**
WICKLUNGSENTWURFSANORDNUNG FÜR EINE ELEKTRISCHE MASCHINE UND WINDENERGIEANLAGE
SYSTÈME DE CONCEPTION D'ENROULEMENT POUR MACHINE ÉLECTRIQUE ET GÉNÉRATEUR DE TURBINE ÉOLIENNE

(43) Date of publication of application: 09.10.2019
(73) Proprietor: Siemens Gamesa Renewable Energy A/S, 7330 Brande (DK)
(72) Inventor: Azar, Ziad, Sheffield, S10 4ED (GB); Duke, Alexander, Sheffield, S6 5AG (GB); Samanta, Subhra, 7430 Ikast (DK); Wu, Zhan-Yuan, Sheffield, S10 4BB (GB)
(74) Representative: SGRE-Association

(56) References cited:
- EP-A1- 1 940 007
- EP-A1- 2 492 501
- US-A1- 2010 289 372
- US-A1- 2015 318 751
- US-A1- 2017 271 937

## Description

### Field of invention

The present invention relates to an arrangement for an electrical machine, relates to a stator segment for an electrical machine, relates to a wind turbine and further relates to a method of operating an electrical machine, in particular a generator.

### Art Background

An electrical generator is for example installed in a wind turbine to generate electrical energy from wind energy. In general, in electrical machines, for example permanent magnet generators, the coils (or groups of coils in series) may conventionally be connected in parallel to form a complete system and share the total current of the generator. These parallel groups are shared conventionally via a common neutral connection (either bus bar or wire connection) that adds cost, weight and installation time to the product or production. This in particular applies to large segmented electrical machines, such as wind turbine applications, where a bus bar must be included for the neutral connection around the entire circumference of the machine. Documents EP 2 492 501 A1 and US 2015/318751 show examples of large segmented electrical machines.

Thus, there may be a need for a wiring arrangement for an electrical machine, for a stator segment, for an electrical machine and in particular to a wind turbine and further there may be a need for a method of operating an electrical machine, wherein the system has simpler construction, in particular requires less space and have less weight.

### Summary of the Invention

This need may be met by the subject matter according to independent claim 1.
Advantageous embodiments of the present invention are described by the dependent claims.

The present invention provides an electrical machine according to claim 1, comprising plural stator segments, wherein each stator segment comprises an arrangement.

The arrangement is a stator wiring arrangement for a stator portion of an electrical machine, in particular a generator. The arrangement may in particular be adapted for a generator, in particular a wind turbine generator.

The multiple first coils may be considered to form a first group of coils comprising wiring or wires partly wound to form the coil and partly having straight or curved sections. In particular, the number of first coils may be equal to or for example two times the number of phases. For example, three first coils may be comprised within the arrangement each one providing a phase, thus allowing currents to be flowing through the three first coils which are phase-shifted by 120°. In other embodiments, the number of first coils may be two times the number of phases. For example, six first coils may be comprised within the arrangement, wherein a respective series connection of two first coils provides a respective phase.

Analogously, the number of second coils may be equal to or for example two times the number of phases. The at least multiple second coils may for example comprise multiple second coils and further multiple third coils or even further multiple fourth coils, multiple fifth coils, multiple sixth coils or even more groups of further coils. Each group of the coils (i.e. the multiple first coils, the multiple second coils, the multiple third coils and so on) may comprise a same number of coils and may provide a same number of multiple phases. The at least multiple second coils may also be referred to as at least one second group of coils.

Each of the coils of all parallel groups of coils has one end (i.e. one end of a wire forming the coil) and another end (i.e. another end of the wire forming the coil). At the one ends of the coils, any of the multiple first coils (i.e. each coil of the first group of coils) is electrically disconnected (thus allowing no current flowing between respective coils at this end of the coils) from any of the multiple second coils (i.e. from each coil of the at least one second group of coils). Furthermore, if the at least multiple second coils for example comprise multiple second coils, multiple third coils, multiple fourth coils and so on, no coil belonging to a particular group of coils is, at the one end, electrically connected to any coil of another group of the coils. Thus, at the one end, any coil of a particular parallel group of coils is electrically disconnected from any coil of any other parallel group of coils.

Thereby, a neutral bus bar for electrically connecting coils of different groups to each other at the one end may be dispensed with, thereby simplifying the construction and reducing weight. In particular, the common neutral connection between parallel groups (i.e. groups of coils) may thereby be removed which could be beneficial for reducing loss due to circulating current and may improve the power sharing between the parallel groups. According to the prior art, the neutral points of all parallel groups (for example of coils) are connected by a bus bar or cabling system, thus using more material and associated costs during manufacturing busbar or cable system.

According to an embodiment of the present invention, the neutral point link between parallel groups is removed. By removing the linked neutral, the entire neutral bus bar can be removed. The only neutral connection in this case may be the connection between the phases of a group rather than between the groups.

According to an embodiment of the present invention, at the respective one ends of the coils, the multiple first coils are all electrically connected to each other, wherein at the respective one ends of the coils, the multiple second coils are all electrically connected to each other.

Thus, all coils of one group are, at the one ends of the coils, electrically connected to each other. Further, if there is an arbitrary number of groups of coils, the coils of each group are, at the one ends of the coils, electrically connected to each other. Thereby, a star configuration is achieved. Each group of the coils may provide, at the other end of the coils, three phases. At the one end of the coils, however, all coils of each group are electrically connected to each other, thereby forming a conventional star configuration.

According to an embodiment of the present invention, at respective other ends of the coils, the first coil(s) providing a same phase as the second coil(s) are electrically connected to each other.

The multiple first coils may for example comprise a first coil (or first coils) providing a "U"-phase (or phase A), a first coil (or first coils) providing a "V"-phase (or phase B) and a first coil (or first coils) providing a "W"-phase (or phase C). The same may apply to the second coils (and also to the third coils, fourth coils, fifth coils, and so on, if present). A coil of the first coils providing for example the phase U may be electrically connected to a coil of the second group (and the third group and the fourth group and the fifth group and so on, if present) also providing the U-phase. The same may apply to the other phases. An analogous connection may be provided if there are more than three phases, for example four phases, five phases, six phases or even more phases. Thereby, electrical power of the generator may be provided by several parallel groups of coils, enhancing the power output reduce losses and easy the coil forming and insertion

According to an embodiment of the present invention, the multiple first coils and/or the multiple second coils comprise, for each phase, at least two series connected coils windable in same or opposite winding directions around stator teeth.

If the multiple first coils and/or the multiple second coils comprise, for each phase, at least two series-connected coils windable in same or opposite winding directions around stator teeth, a conventional winding scheme may be supported.

In other embodiments, the multiple first coils and/or the multiple second coils may comprise, for each phase, exactly one coil windable around a stator tooth. In further embodiments, the multiple first coils and/or the multiple second coils may comprise, for each phase, more than two series-connected coils, such as three coils, four coils, five coils, six coils or even more coils which may be windable around stator teeth, for example in same winding directions or in winding directions which alternate from one coil to the next coil in the series. In particular, winding directions may differ among coils in the series. Thereby, multiple configurations of winding schemes may be supported.

According to an embodiment of the present invention, the first coils and/or the second coils (and/or the third coils and/or the fourth coils and so on, if present) provide three phases or four phases or five phases or six phases or even more phases. Providing several phases may allow currents being conveyed through the coils to have different phase-shifts which may be set to 360° divided by the number of phases.

According to an embodiment of the present invention, the arrangement is adapted to provide stator windings in a sector, in particular 60° or 90° or 180° or 360°, of a whole circumference. Thereby, embodiments of the present invention support a segmented stator which may be beneficial for transportation of large generators.

According to an embodiment of the present invention it is provided a stator segment for an electrical machine, comprising plural stator teeth and an arrangement according to one of the preceding claims, the coils being arranged over the stator teeth.

The plural stator teeth may protrude radially outwards or radially inwards. Over each stator tooth, one or more coils of the first coils and/or the second coils may be arranged or put. The stator teeth may comprise ferromagnetic material. The stator segments and in particular the plural stator teeth may for example extend over a section of 60° or 90° or 180° or 360° of a whole circumference.

According to an embodiment of the present invention it is provided an electrical machine, in particular generator, comprising:
an inner or outer rotor having plural magnets (e.g. the electrical machine could also be electrically excited), the rotor rotatably supported relative to the at least one stator segment.

One or more stator segments are assembled to form a whole circumference. Upon rotation of the rotor having the plural magnets, currents may be induced in the first coils and in the at least second coils (in particular further also in the third coils, the fourth coils, the fifth coils, if present).

According to the present invention, the electrical machine further comprises for each of one, two or even more stator segments a converter connected having input terminals for the multiple phases, the input terminal for a respective phase connected to the respective other ends of the first coils and second coils providing that phase.

The converter may in particular be or comprise an AC-DC portion, a DC link-portion and a DC-AC portion, wherein the converter may be configured for converting a variable frequency electrical power to an essentially fixed frequency electrical power. The converter may for example comprise three power input terminals and three power output terminals for outputting electrical power in three electrical phases.

According to an embodiment of the present invention it is provided a wind turbine, comprising: a rotation shaft; plural rotor blades mounted at the rotation shaft; and a generator according to the preceding claim, wherein the rotor of the generator is mechanically coupled to the rotation shaft. The generator may be installed within a nacelle which may be mounted on top of a wind turbine tower.

It should be understood, that features, individually or in any combination, disclosed, described or explained in the context of an arrangement for an electrical machine, in the context of a stator segment or in the context of an electrical machine, may also, individually or in any combination, be provided for a method of operating an electrical machine according to embodiments of the present invention and vice versa.

According to an embodiment of the present invention it is provided a method of operating an electrical machine, in particular generator, the method comprising: using multiple first coils for providing multiple phases; using at least multiple second coils for providing multiple phases; and keeping, at respective one ends of the coils, any of the multiple first coils electrically disconnected from any of the multiple second coils.

Embodiments of the present invention are now described with reference to the accompanying drawings. The invention is not restricted to the illustrated or described embodiments.

### Brief Description of the Drawings

Fig. 1 illustrates an arrangement for an electrical machine according to an embodiment of the present invention in a schematic circuit diagram;
Fig. 2 schematically illustrates an electrical machine according to an embodiment of the present invention comprising four stator segments according to embodiments of the present invention;
Fig. 3 illustrates an arrangement according to the prior art as a schematic circuit diagram;
Fig. 4 schematically illustrates a stator segment according to the prior art;
Fig. 5 illustrates an arrangement for an electrical machine according to an embodiment of the present invention in a schematic circuit diagram;
Figs. 6 and 7 illustrate graphs showing neutral currents with connected neutral points without and with a segment gap, respectively;
Figs. 8 and 9 illustrate graphs showing parallel group currents of phase A and C respectively for disconnected neutral points;
Figs. 10 and 11 illustrate graphs showing parallel group currents of a phase A and a phase C, respectively, for connected neutral points;
Fig. 12 schematically illustrates a wind turbine according to an embodiment of the present invention.

### Detailed Description

The illustration in the drawings is in schematic form. It is noted that in different figures, similar or identical elements are provided with the same reference signs or with reference signs, which are different from the corresponding reference signs only within the first digit. Elements same or similar in structure and/or function are labelled in the accompanying figures with reference signs differing only in the first digit.

The arrangement 100 for an electrical machine according to an embodiment of the present invention comprises multiple first coils 101a, 101b, 101c for providing multiple phases A, B, C. The arrangement 100 further comprises multiple second coils 103a, 103b, 103c for providing also the multiple phases A, B, C. The arrangement 100 further comprises multiple third coils 105a, 105b, 105c for also providing the multiple phases A, B, C. Each of the coils 101a, ..., 105c comprises at one side 107 one end of the respective coils and at another end 109 another end of the respective coils. At the one ends (on side 107) of all the coils 101a, ..., 105c (also labelled with reference signs A1, A2, A3, B1, B2, B3 and C1, C2 and C3), any of the multiple first coils 101a, 101b, 101c is disconnected from any of the multiple second coils 103a, 103b, 103c and also electrically disconnected from any of the multiple third coils 105a, 105b, 105c.

However, at the respective one ends (on side 107) of the coils, the multiple first coil 101a, 101b and 101c are electrically connected to each other at a first neutral connection point N1. Further, the respective one ends (on side 107) of the coils, the multiple second coils 103a, 103b and 103c are electrically connected to each other at a second neutral point N2. Furthermore, at the one end (at side 107) of the coils, the multiple third coils 105a, 105b and 105c are also electrically connected to each other at a third neutral point N3.

At the respective other ends of the coils (i.e. on side 109), the first coil providing a same phase (for example A, B, C) as the second coil and the third coil are electrically connected to each other. For example, the first coil 101a providing a phase A is electrically connected at the other end to the second coil 103a and to the third coil 105a at a first connection point P1. Similarly, the first coil 101b is, at the respective other end, providing a phase B and at this other side, the first coil 101b is electrically connected to the other end of the second coil 103b and also of the third coil 105b providing the same phase B at a second connection point P2. Furthermore, the first coil 101c is, at the other end (i.e. at the other side 109) providing a phase C and is electrically connected to the second coil 103c and also the third coil 105c both also providing the phase C.

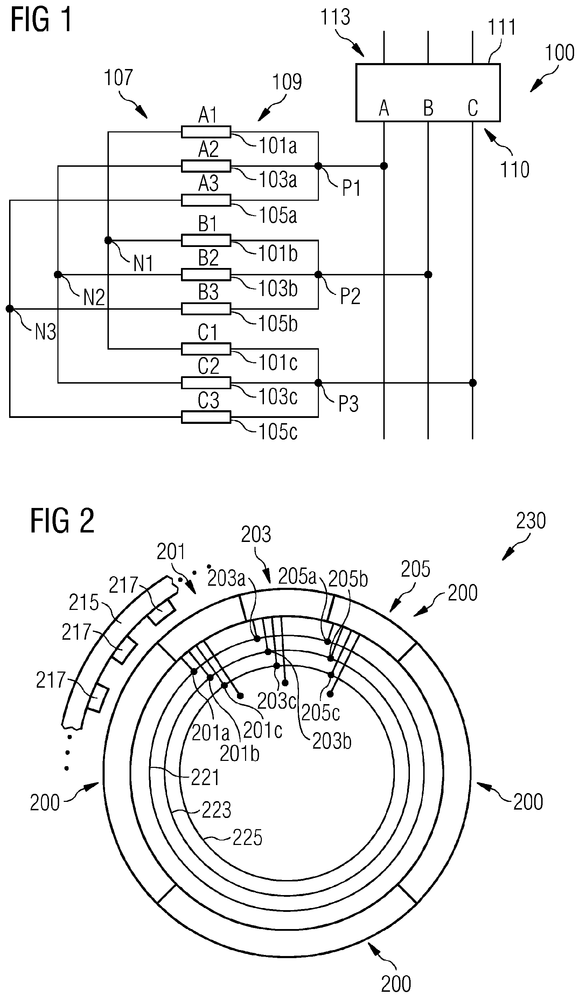

In the illustrated embodiment, the first coils 101a, 101b, 101c provide three phases which hold also for the second coils 103a, 103b, 103c and applies also to the third coils 105a, 105b, 105c. The arrangement 100 illustrated in Fig. 1 in a schematic circuit diagram may for example be utilized for each segment (or at least one segment) of a one segment or multiple segments electrical machine, in particular electrical generator. Thereby, stator windings (of one segment) may for example form a sector covering 60° or 90° or 180° or 360° of a whole circumference.

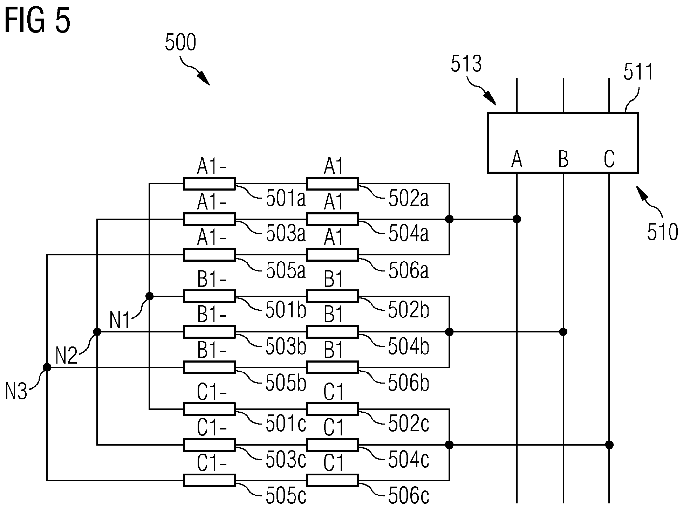

Instead of the first coils for one phase (i.e. phases A, B, C) each providing only a single coil, in other embodiments, multiple coils may be connected in series as is for example illustrated in Fig. 5 illustrating an arrangement 500 for an electrical machine according to another embodiment of the present invention. Herein, the multiple first coils comprise coils 501a, 502a being series-connected and providing a phase A. Further, the multiple first coils comprise coils 501b, 502b being also series-connected and providing the phase B. Further, the multiple first coils comprise the coils 501c, 502c which are also series-connected and provide a phase C. Analogously also the multiple second coils 503a, 504a, ..., 503c, 504c also provide, for each phase a series connection of two coils which are in particular windable in same or opposite winding directions around stator teeth. In further embodiments, the first coils and/or second coils and/or third coils comprise, for each phase, an even higher number of series-connected coils.

In an electrical machine according to an embodiment of the present invention, the output phases A, B, C may be connected to respective input terminals of a converter 111, 511 which may provide at output terminals 113, 513 a substantially fixed frequency power stream. The input phases are connected to converter input terminals 110, 510.

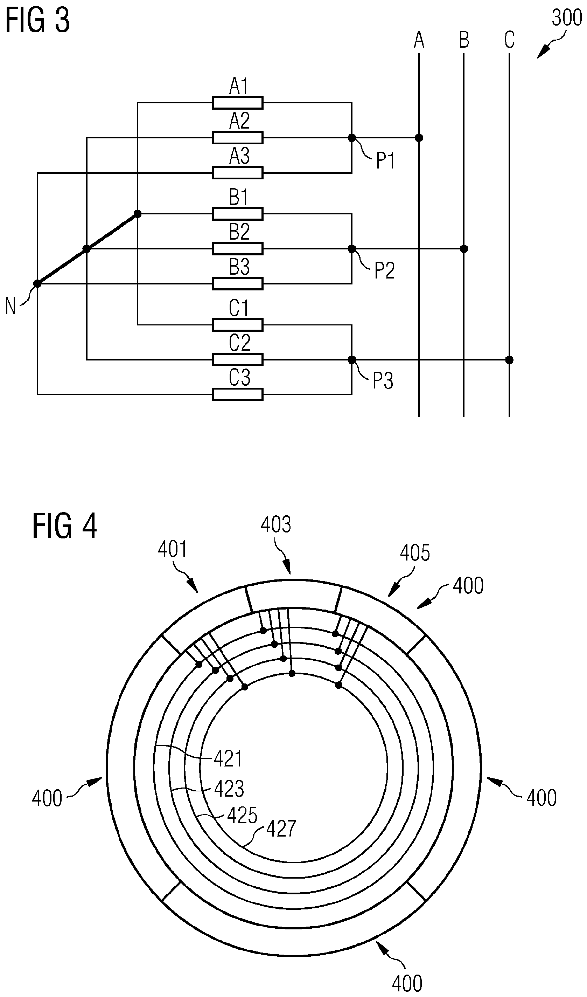

It should be noted that the neutral points N1, N2, N3 (in Fig. 1 and 5) on the one side 107 of the coils are not electrically connected to each other but disconnected from each other. In a conventional system, schematically illustrated in Fig. 3 in a schematic circuit diagram, the neutral connection points N1, N2, N3 are electrically connected to each other thereby requiring an additional neutral bus bar. This bus bar can be dispensed with according to embodiments of the present invention reducing weight and simplifying the construction.

Fig. 2 schematically illustrates an electrical machine 230 according to an embodiment of the present invention comprising four arrangements 200 for an electrical machine according to an embodiment of the present invention, for example four arrangements 100 as illustrated in Fig. 1. The electrical machine 230 illustrated in Fig. 2 comprises four segments, each comprising an arrangement 200. Other embodiments may comprise less or more segments, for example may comprise two segments, three segments, five segments, six segments or even more segments.

The electrical machine 230 further comprises a rotor 215 having plural permanent magnets 217 mounted thereon, wherein the rotor is an outer rotor which is rotatably supported relative to the arrangements 200. In particular, the electrical machine further comprises not illustrated plural stator teeth, wherein coils of the arrangements 200 are arranged over the stator teeth. The multiple first coils 101a, 101b, 101c illustrated in Fig. 1 are referred to in Fig. 2 collectively with reference sign 201. Further, the multiple second coils 103a, 103b, 103c illustrated in Fig. 1 are collectively referred to in Fig. 2 with reference sign 203. Further, the multiple third coils 105a, 105b, 105c are collectively referred to in Fig. 2 with reference sign 205.

A bus bar 221 for phase A is electrically connected to the other end of the first coil 201a electrically connected to the second coil 203a and also electrically connected to the third coil 205a. Thus, the bus bar 221 for the phase A may be considered as the structural implementation of the first connection point P1 illustrated in Fig. 1. Similarly, the first coil 201b, the second coil 203b and the third coil 205b all providing the phase B are all electrically connected to each other via a bus bar 223 which may be considered as a structural implementation of the second connection point P2 illustrated in Fig. 1. Finally, the first coil 201c, the second coil 203c and the third coil 205c are, at the other side 109 (see Fig. 1) all electrically connected to each other, providing a phase C and are electrically connected to each other to a bus bar 225. Thereby, the bus bar 225 may be considered to be the structural implementation of the third connection point P3 illustrated in Fig. 1.

It should be noted, that the electrical machine 230 illustrated in Fig. 2 in a schematic form does not comprise a neutral bus bar which in a conventional system illustrated in Fig. 4 is present as a bus bar 427 and which electrically connects at the one end 107 all the multiple first coils, the multiple second coils and the multiple third coils with each other.

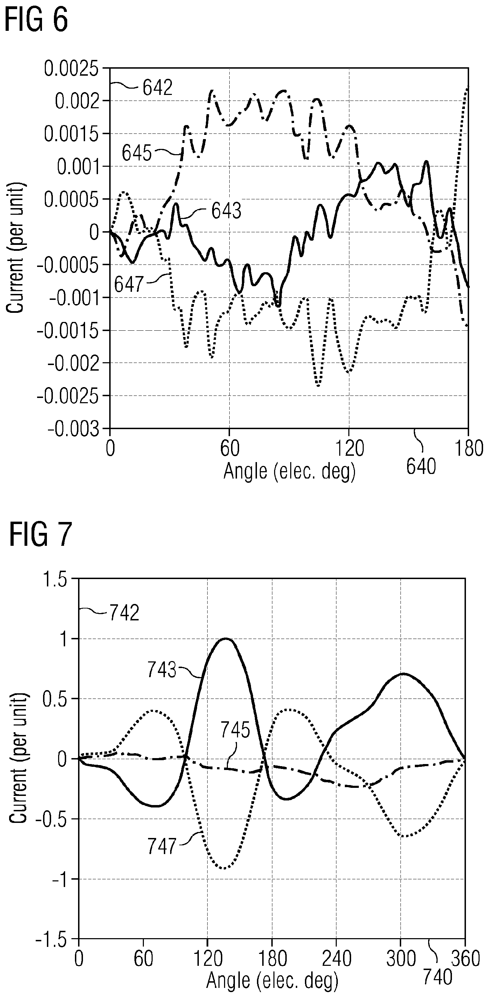

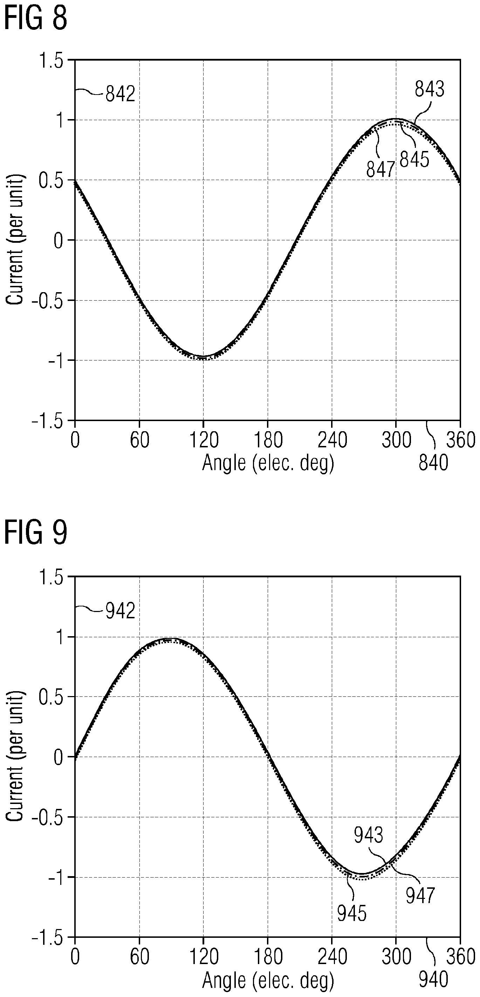

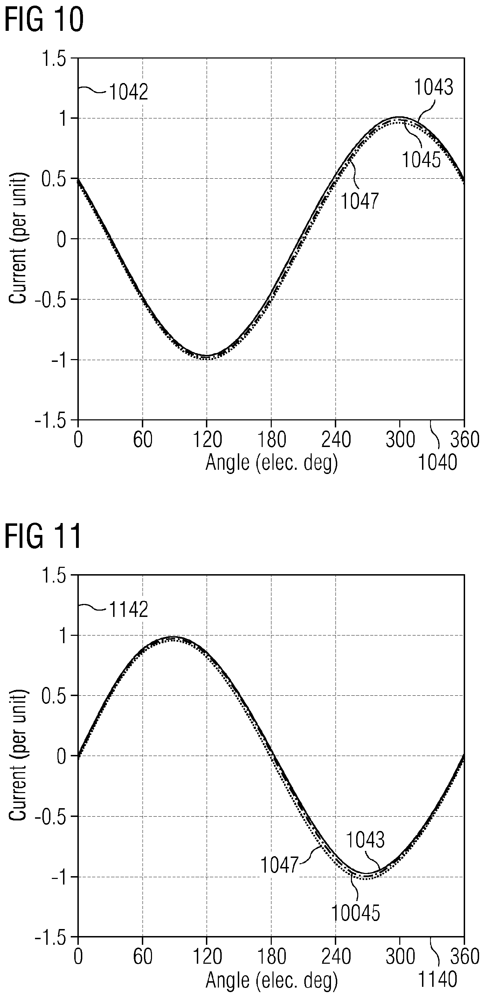

The effect of removing the inter-connected neutral point (i.e. the disconnection of neutral points N1, N2 and N3) on the current balance between each parallel group are illustrated in Figs. 6 and 7, which show a large increase in neutral currents with connected neutrals when the segment gap, which illustrated in Fog. 2, is considered. By disconnecting the neutrals, the sharing of current between parallel groups can be more evenly shared as seen in Figs. 8 and 9 (disconnected neutrals) when compared with Figs. 10 and 11 (connected neutrals).

Figs. 6 and 7 illustrate graphs in a coordinate system having an abscissa indicating the electrical angle 640, 740 and having an ordinate 642, 742, respectively, showing the current in units or per unit. Herein, the curves 643, 743 represent the currents of the first group of coils without and with a segment gap, respectively. The curves 645, 745 denote the currents of the second group of coils without and with a segment gap, respectively, and the curves 647, 747 denote the currents of the third group of coils without and with a segment gap, respectively. In all cases, the neutral connection points N1, N2, N3 are electrically connected to each other, representing the conventional configuration.

Thereby, Fig. 6 illustrates the currents as observed without a segment gap and Fig. 7 illustrates the current while a segment gap is present.

A more even sharing of the currents between each group would reduce the potential for thermal hotspots in the groups where a higher current is flowing due to the imbalance, also stopping the current circulating between branches leading to extra resistive losses and lower generator efficiency.

Figs. 8 to 11 illustrate curves in coordinate systems having again as abscissas 840, ..., 1140 the electrical angle and having as ordinates 842, ..., 1142 the current per unit currents in each of the three parallel groups for phases A and C. Thereby, these two phases have been chosen as they are adjacent to the segment gap. Phase B is located towards the centre of each coil group and therefore immune to the imbalance caused by the segment gap.

The curves 843, 943 represent the current in the first group of coils for the phases A and C, respectively. The curves 845, 945 represent the currents of the second group for the phases A and C and the curves 847, 947 represent the currents of the third group for the phases A and C. Thereby, Figs. 8 and 9 illustrate the situation according to an embodiment of the present invention, wherein the neutral connection points N1, N2 and N3 are disconnected from each other.

Figs. 10 and 11 represent the respective curves 1043, 1045, 1047 and 1143, 1145, 1147, respectively, for the first, the second and the third group while the neutral connection points N1, N2 and N3 are electrically connected to each other. With the connected neutral (Figs. 10 and 11), the circulating current flows through the neutral due to the imbalance caused by the segment gaps. This can be seen by the disparity of phase A in group one current in Fig. 10 and the phase C group three current in Fig. 11.

By disconnecting the neutral, the imbalance current can no longer flow between the parallel groups, so the currents sharing between the groups is much more equal. This can be seen in Figs. 8 and 9 for phase A and phase C, respectively, where much lower disparity between the current peaks is observed. This results in lower resistive losses, it may however reduce the risk of localized thermal hotspots within the segment.

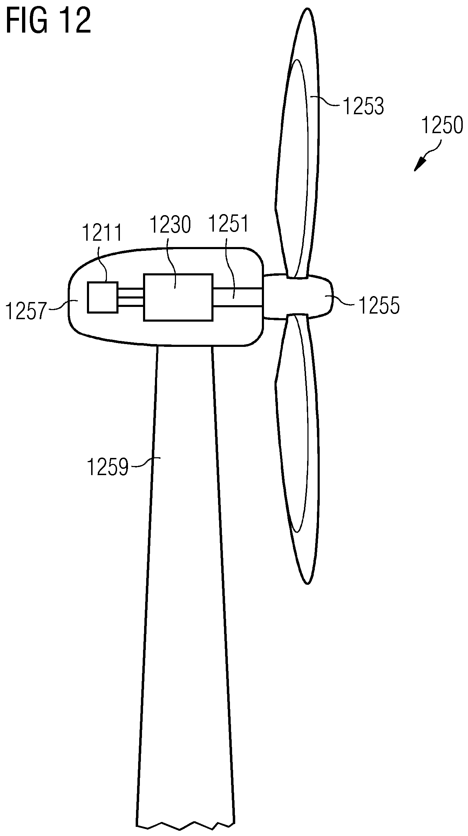

Fig. 12 schematically illustrates a wind turbine according to an embodiment of the present invention. The wind turbine 1250 comprises a rotation shaft 1251 at which plural rotor blades 1253 are mounted. In particular, the rotor blades are mounted at a hub 1255 connected to the rotation shaft 1251, it is worth mentioning that the hub might be directly connected to generator (direct-drive wind turbine). Furthermore, the wind turbine 1250 comprises a generator 1230 for example as an implementation of the electrical machine 230 illustrated in Fig. 2. Furthermore, the generator 1230 of the wind turbine 1250 is electrically connected to a converter 1211 which may for example be configured as the converter 111 illustrated in Fig. 1. The generator 1230 is harboured within a nacelle 1257 which is mounted on top of a wind turbine tower 1259, and the converter 1211 is placed within a nacelle 1257 or tower 1259.

The electrical machine 230 (or generator 1230) illustrated in Fig. 2 may perform a method of operating an electrical machine according to an embodiment of the present invention wherein the first coils are used for providing multiple phases, the second coils are used for providing multiple phases and at respective one ends of the coils, any of the multiple first coils are kept electrically disconnected from any of the multiple second coils.

Embodiments of the present invention may offer the following benefits:
- reduction of weight and cost of generator manufacturing (particularly segment cost) by removing the neutral bus bar
- improvement of the performance (for example output power and/or efficiency and thermal capability) of the electrical machine by balancing the currents between parallel branches and eliminating the circulating current (no extra resistive losses)
- minimization of the effects of imbalance between phases due to manufacturing tolerance, such as segment gaps/air gap variation

Embodiments of the present invention are suitable for all electrical machines in a star connection, i.e. permanent magnet surface mounted machine (motors or generators) or interior permanent magnets machines or non-permanent magnet machines. The electrical machine may for example be utilized for marine propulsion, rail traction, industrial drives and so forth.

Embodiments of the present invention are applicable to both internal and external rotor machines as well as integer and fractional slot variations.

Although only three parallel groups per segment have been illustrated, any number of groups (for example more than one parallel groups) that may make up an electrical machine could benefit from removing the linked neutral between paralleled groups. Also, the number of segments could be any positive integer.

Although illustrated with only a three-phase machine, the technique is applicable to other multiple phase machines in a star connection.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Electrical machine (230), in particular generator, comprising:
plural stator segments (200), in particular two or three or four stator segments, forming a whole circumference; and
an inner or outer rotor (215) rotatably supported relative to the stator segments (200),
wherein each stator segment comprises:
plural stator teeth; and
an arrangement (100) for an electrical machine (230), the arrangement comprising:
multiple first coils (101a, 101b, 101c) for providing multiple phases (A, B, C);
at least multiple second coils (103a, 103b, 103c) for providing the multiple phases (A, B, C),
wherein, at respective one ends (107) of the coils, any of the multiple first coils (101a, 101b, 101c) is electrically disconnected from any of the multiple second coils (103a, 103b, 103c),
wherein the coils are arranged over the stator teeth,
wherein at respective other ends (109) of the coils, the first coil(s) (101a) providing a same phase (A, B, C) as the second coil(s) (103a) are electrically connected to each other,
the electrical machine further comprising for each of one, two or even more stator segments:
a converter (111) connected having input terminals for the multiple phases, the input terminal for a respective phase connected to the respective other ends of the first coils and second coils providing that phase.

2. Electrical machine (230)according to the preceding claim, wherein at the respective one ends (109) of the coils, the multiple first coils (101a, 101b, 101c) are all electrically connected to each other,
wherein at the respective one ends of the coils, the multiple second coils (103a, 103b, 103c) are all electrically connected to each other.

3. Electrical machine (230)according to one of the preceding claims, wherein the multiple first coils (101a, 101b, 101c) and/or the multiple second coils (103a, 103b, 103c) comprise, for each phase, at least two series connected coils (501a, 502a; 503a, 504a) windable in opposite winding directions around stator teeth.

4. Electrical machine (230)according to one of the preceding claims, wherein the multiple first coils (101a, 101b, 101c) and/or the multiple second coils (103a, 103b, 103c) comprise, for each phase, at least two series connected coils (501a, 502a; 503a, 504a) windable in same winding directions around stator teeth.

5. Electrical machine (230)according to one of the preceding claims, wherein the first coils and/or the second coils provide three or four or five or even more phases (A, B, C).

6. Electrical machine (230)according to one of the preceding claims, the arrangement adapted to provide stator windings in a sector (200), in particular 60° or 90° or 180°, of a whole circumference.

7. Electrical machine (230) according to the preceding claim, wherein the rotor has plural permanent magnets (217).

8. Wind turbine (1250), comprising:
plural rotor blades (1253); and
a generator (1230) according to one of the preceding claims,
wherein the rotor of the generator is mechanically coupled to the rotor blades.

## Patentansprüche

1. Elektrische Maschine (230), insbesondere ein Generator, umfassend:
eine Vielzahl von Statorsegmenten (200), insbesondere zwei oder drei oder vier Statorsegmente, die einen ganzen Umfang bilden; und
einen Innen- oder Außenrotor (215), der relativ zu den Statorsegmenten (200) drehbar gelagert ist,
wobei jedes Statorsegment umfasst:
eine Vielzahl von Statorzähnen; und
eine Anordnung (100) für eine elektrische Maschine (230), wobei die Anordnung umfasst:
mehrere erste Spulen (101a, 101b, 101c) zum Bereitstellen mehrerer Phasen (A, B, C);
mindestens mehrere zweite Spulen (103a, 103b, 103c) zum Bereitstellen der mehreren Phasen (A, B, C),
wobei, an jeweiligen einen Enden (107) der Spulen, eine beliebige der mehreren ersten Spulen (101a, 101b, 101c) elektrisch von einer beliebigen der mehreren zweiten Spulen (103a, 103b, 103c) getrennt ist,
wobei die Spulen über den Statorzähnen angeordnet sind,
wobei, an jeweiligen anderen Enden (109) der Spulen, die erste(n) Spule(n) (101a), die eine gleiche Phase (A, B, C) wie die zweite(n) Spule(n) (103a) bereitstellen, elektrisch miteinander verbunden sind,
wobei die elektrische Maschine ferner für jedes von einem, zwei oder sogar mehr Statorsegmenten umfasst:
einen verbundenen Wandler (111), der Eingangsanschlüsse für die mehreren Phasen aufweist, wobei der Eingangsanschluss für eine jeweilige Phase mit den jeweiligen anderen Enden der ersten Spulen und zweiten Spulen, die diese Phase bereitstellen, verbunden ist.

2. Elektrische Maschine (230) nach dem vorhergehenden Anspruch, wobei, an den jeweiligen einen Enden (109) der Spulen, die mehreren ersten Spulen (101a, 101b, 101c) alle elektrisch miteinander verbunden sind,
wobei, an den jeweiligen einen Enden der Spulen, die mehreren zweiten Spulen (103a, 103b, 103c) alle elektrisch miteinander verbunden sind.

3. Elektrische Maschine (230) nach einem der vorhergehenden Ansprüche, wobei die mehreren ersten Spulen (101a, 101b, 101c) und/oder die mehreren zweiten Spulen (103a, 103b, 103c) für jede Phase mindestens zwei reihenverbundene Spulen (501a, 502a; 503a, 504a) umfassen, die in entgegengesetzte Wickelrichtungen um Statorzähne wickelbar sind.

4. Elektrische Maschine (230) nach einem der vorhergehenden Ansprüche, wobei die mehreren ersten Spulen (101a, 101b, 101c) und/oder die mehreren zweiten Spulen (103a, 103b, 103c) für jede Phase mindestens zwei reihenverbundene Spulen (501a, 502a; 503a, 504a) umfassen, die in dieselben Wickelrichtungen um Statorzähne wickelbar sind.

5. Elektrische Maschine (230) nach einem der vorhergehenden Ansprüche, wobei die ersten Spulen und/oder die zweiten Spulen drei oder vier oder fünf oder sogar mehr Phasen (A, B, C) bereitstellen.

6. Elektrische Maschine (230) nach einem der vorhergehenden Ansprüche, wobei die Anordnung dazu eingerichtet ist, Statorwicklungen in einem Sektor (200), insbesondere 60° oder 90° oder 180°, eines ganzen Umfangs bereitzustellen.

7. Elektrische Maschine (230) nach dem vorhergehenden Anspruch, wobei der Rotor eine Vielzahl von Permanentmagneten (217) aufweist.

8. Windkraftanlage (1250), umfassend:
eine Vielzahl von Rotorschaufeln (1253); und
einen Generator (1230) nach einem der vorhergehenden Ansprüche, wobei der Rotor des Generators mechanisch mit den Rotorschaufeln gekoppelt ist.

## Revendications

1. Machine électrique (230), en particulier générateur, comprenant :
plusieurs segments de stator (200), en particulier deux ou trois ou quatre segments de stator, formant une circonférence complète ; et
un rotor interne ou externe (215) porté de manière rotative par rapport aux segments de stator (200),
dans laquelle chaque segment de stator comprend :
plusieurs dents de stator ; et
un agencement (100) pour une machine électrique (230), l'agencement comprenant :
de multiples premières bobines (101a, 101b, 101c) pour la fourniture de multiples phases (A, B, C) ;
au moins de multiples secondes bobines (103a, 103b, 103c) pour la fourniture des multiples phases (A, B, C),
dans laquelle, à des extrémités (107) respectives des bobines, l'une quelconque des multiples premières bobines (101a, 101b, 101c) est électriquement déconnectée de l'une quelconque des multiples secondes bobines (103a, 103b, 103c),
dans laquelle les bobines sont agencées par-dessus les dents de stator,
dans laquelle aux autres extrémités (109) respectives des bobines, la ou les première(s) bobine(s) (101a) fournissant une même phase (A, B, C) que la ou les seconde(s) bobine(s) (103a) sont électriquement connectées les unes aux autres,
la machine électrique comprenant en outre pour chacun parmi un, deux ou davantage de segments de stator :
un convertisseur (111) connecté ayant des bornes d'entrée pour les multiples phases, la borne d'entrée pour une phase respective étant connectée aux autres extrémités respectives des premières bobines et des secondes bobines fournissant cette phase.

2. Machine électrique (230) selon la revendication précédente, dans laquelle aux extrémités (109) respectives des bobines, les multiples premières bobines (101a, 101b, 101c) sont toutes électriquement connectées les unes aux autres,
dans laquelle aux extrémités respectives des bobines, les multiples secondes bobines (103a, 103b, 103c) sont toutes électriquement connectées les unes aux autres.

3. Machine électrique (230) selon l'une des revendications précédentes, dans laquelle les multiples premières bobines (101a, 101b, 101c) et/ou les multiples secondes bobines (103a, 103b, 103c) comprennent, pour chaque phase, au moins deux bobines connectées en série (501a, 502a ; 503a, 504a) aptes à être enroulées dans des sens d'enroulement opposés autour des dents de stator.

4. Machine électrique (230) selon l'une des revendications précédentes, dans laquelle les multiples premières bobines (101a, 101b, 101c) et/ou les multiples secondes bobines (103a, 103b, 103c) comprennent, pour chaque phase, au moins deux bobines connectées en série (501a, 502a ; 503a, 504a) aptes à être enroulées dans des sens d'enroulement identiques autour des dents de stator.

5. Machine électrique (230) selon l'une des revendications précédentes, dans laquelle les premières bobines et/ou les secondes bobines fournissent trois ou quatre ou cinq ou davantage de phases (A, B, C).

6. Machine électrique (230) selon l'une des revendications précédentes, l'agencement étant conçu pour fournir des enroulements de stator dans un secteur (200), en particulier sur 60° ou 90° ou 180°, d'une circonférence complète.

7. Machine électrique (230) selon la revendication précédente, dans laquelle le rotor possède plusieurs aimants permanents (217).

8. Éolienne (1250), comprenant :
plusieurs pales de rotor (1253) ; et
un générateur (1230) selon l'une des revendications précédentes,
dans laquelle le rotor du générateur est mécaniquement couplé aux pales de rotor.
